# FASCICULE DE BREVET EUROPEEN

(11) **EP 2 608 466 B1**
(45) Date de publication et mention de la délivrance du brevet: **01.02.2017**
(21) Numéro de dépôt: 12197906.6
(22) Date de dépôt: 18.12.2012
(51) Int. Cl.: H04L 12/801, H04B 7/185

(54) **Procédé et système pour une retransmission optimisée d'un message dans un contexte de communication satellite.**
Verfahren und Vorrichtung zur einer optimierten widerholten Übertragung von Nachrichten in einem Satellitenkommunikationssystem
System and method for an optimised retransmission of a message in a satellite communication

(30) Priorité: 20.12.2011 FR 1103944
(43) Date de publication de la demande: 26.06.2013
(73) Titulaire: Thales, 92400 Courbevoie (FR)
(72) Inventeur: Gineste, Mathieu, 31000 Toulouse (FR)
(74) Mandataire: Brunelli, Gérald

(56) Documents cités:
- US-A- 5 838 668
- US-A1- 2004 179 506

## Description

Le domaine de l'invention concerne les communications utilisant un partage de la ressource basé sur un accès multiple à la demande de type DAMA (Demand Assignment Multiple Access) et en particulier les communications satellites.

Le partage d'une ressource de communication basé sur un accès multiple à la demande permet d'allouer cette ressource à un utilisateur souhaitant transmettre des données par l'intermédiaire de cette ressource, sans l'utiliser en permanence. Cette technique permet de partager une ressource limitée entre de nombreux utilisateurs accédant à cette ressource ponctuellement. Une telle ressource est gérée par un plan d'allocation attribuant des créneaux temporels aux utilisateurs, en fonction de leur besoin, pour leur permettre d'accéder à la ressource. Lorsqu'un utilisateur souhaite transmettre des données, il émet au préalable une requête de capacité pour réserver la ressource de communication nécessaire à la transmission du message. Un plan d'allocation est généré périodiquement de façon à prendre en compte les requêtes de capacité des différents clients.

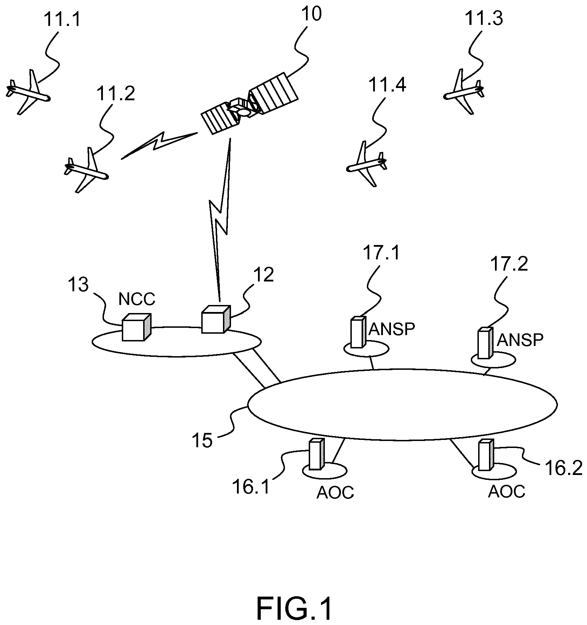

La figure 1 présente un système de communication aéronautique entre des aéronefs 11.1, 11.2, 11.3, 11.4 et une passerelle 12. Le système utilise une ressource de communication satellite, dite ressource voie retour, permettant de transmettre des messages depuis les aéronefs 11.1, 11.2, 11.3, 11.4 vers la passerelle 12. Chacun des aéronefs 11.1, 11.2, 11.3, 11.4 comporte des applications embarquées et un terminal pour communiquer avec la passerelle 12. Les messages envoyés par les aéronefs sont associés à des services. On peut citer par exemple : le service COTRAC (acronyme de l'expression anglo-saxonne « Common Trajectory Coordination ») qui permet au pilote et au contrôleur du trafic aérien de coordonner la trajectoire de l'aéronef en temps réel. Un message d'un service, qui a une certaine taille, est associé à une priorité et une exigence de délai de bout en bout du réseau de communication.

La ressource de communication satellite est basée sur un accès multiple à la demande. Le système de communication comprend également un centre de contrôle NCC 13 (NCC pour «Network Control Center ») chargé de partager la ressource de communication satellite entre les aéronefs (dont le nombre peut être supérieur à plusieurs milliers).

La passerelle 12 transmet les messages vers un réseau terrestre ATN reliant des centres d'opération de compagnie AOC (acronyme de l'expression anglo-saxonne Airline Operational Control) et des contrôleurs de trafic aérien connecté au réseau de gestion du trafic aérien via des fournisseurs de service de navigation aérienne ANSP (acronyme de l'expression anglo-saxonne « Air Navigation Service Provider »).

Dans le cadre des communications « safety », c'est-à-dire nécessitant un niveau d'intégrité et de fiabilité élevé mais également ayant des exigences temporelles fortes pour certaines d'entre elles, le délai requis pour la retransmission de messages ou de fragments de messages perdus peut engendrer le non respect de ces exigences temporelles. En effet, les pertes de paquets sont non négligeables sur un canal aéronautique voie retour et ces pertes dans le cas d'un accès à la demande induisent des délais de retransmissions non compatible avec les exigences temporelles des applications « safety ».

Dans les communications aéronautiques la quantité de messages émis par utilisateur est faible mais les exigences temporelles sont strictes et une ressource limitée est partagé par un grand nombre d'utilisateurs. En effet, il est nécessaire de recevoir 95% à 99% des messages d'un service donné dans un délai borné (1,4 s de délai à 95 % pour les services les plus exigeants dans le contrôle du trafic aérien). De plus, un accès à la demande (DAMA) induit un délai supplémentaire important en plus du délai de détection d'une perte de message (ou fragment) du fait du processus de requête/allocation pour les données à retransmettre. Ce délai supplémentaire peut conduire rapidement au non respect des exigences temporelles des services « safety » et potentiellement à une utilisation sous-optimale de la ressource satellite.

En outre, dans les solutions techniques connues, le couplage des mécanismes de détection et de retransmission des données avec la gestion de la ressources se limite à une évaluation du nombre de données perdues au niveau d'un terminal pour adapter la puissance, la modulation et/ou le codage utilisés par un terminal mais n'a pas d'influence sur l'allocation des ressources dans le cas d'un accès multiple à la demande de type DAMA.

D'autres solutions permettent de réduire la quantité d'information à retransmettre en cas de données perdues grâce à l'utilisation de codes optimisés. Ces solutions peuvent permettre de limiter le nombre d'erreur sur le canal ou d'utiliser moins de ressources pour la retransmission des données mais elles ne résolvent pas le problème du délai induit par les nécessaires retransmissions ce qui est particulièrement pénalisant pour des communications « safety», notamment concernant les communications pour la gestion du trafic aérien qui ont des exigences de délai très contraignantes pour l'ensemble des messages de leur service. Cependant, ces solutions pourraient être utilisées si nécessaire en complément de la solution proposée.

Dans le cas de systèmes de type DVB-S2/RCS (pour Digital Video Broadcasting-Satellite/Return Channel via Satellite) avec des taux de perte paquets très faibles (en particulier DVB-S2), il s'agit de type de canal quasiment sans erreur, les mécanismes de détection et de retransmission d'erreur ne sont généralement pas utilisés sur le lien satellite et les pertes de données sur le canal sont généralement récupérées par les niveaux supérieurs, lorsque cela est nécessaire (niveaux transport, applicatif). Cette solution n'est pas optimale dans le contexte des communications « safety» car dans ce contexte les taux d'erreur paquets sont beaucoup plus importants et le problème du délai de retransmission des données n'est pas résolus par ce type de solution, il est même aggravé étant donné que la détection et la retransmission se font de bout en bout (impliquant potentiellement le non respect des exigences temporelles des services « safety »).

D'une manière plus générale on connait les systèmes de télécommunication « broadband ». Ces systèmes disposent d'un débit soutenu par utilisateur et de possibilité de préemption d'une donnée à retransmettre sur une ressource déjà allouée. Si le canal est quasiment sans erreur, la retransmission n'est pas prise en compte par le système mais est réalisée de bout en bout (par l'application ou le niveau transport si nécessaire). Cette solution n'est pas applicable au contexte des communications « safety » car le profil de trafic diffère ; en effet, le trafic considéré dans les communications aéronautiques n'est pas un trafic soutenu (comme il peut l'être dans les télécommunications). De plus, le délai de retransmission serait aggravé par un traitement de bout en bout, comme cela a été précédemment mentionné.

Une autre famille de solutions consiste à utiliser un accès aléatoire à la ressource qui permet de se prémunir du délai de requête/allocation de la ressource d'un accès à la demande (DAMA). Ce type d'accès va introduire un taux d'erreur paquet beaucoup plus grand en comparaison des erreurs du canal du fait des collisions entre les messages envoyés par les différents terminaux, ce qui va donc entraîner un plus grand nombre de retransmissions. Le délai devrait théoriquement être réduit pour les transmissions ou les retransmissions de données perdues du fait de la suppression de la phase de requête/allocation, cependant, ce gain n'est que théorique car la mise en place d'une gestion des collisions est requise, ce qui implique des délais d'accès effectifs beaucoup plus importants dans le cas de fort taux de collision lié à une charge importante. Ainsi, les retransmissions vont être beaucoup plus fréquentes et le gain en termes de délai, du fait de la suppression de la phase de requêtes/allocation, ne sera pas suffisant pour compenser le délai effectif d'accès à la ressource (imposé pas la gestion des collisions) ni les délais associés à ces retransmissions. Ce type de solution ne permet donc pas de répondre pleinement aux exigences temporelles des services « safety», en particulier pour la gestion du trafic aérien car même si chaque aéronef a un trafic moyen très faible, un grand nombre d'aéronefs doit pouvoir se partager une ressource restreinte, ce qui conduit nécessairement à des pics de trafics (au moins de manière temporaire). Dans ce cas, un grand nombre de collisions résulte de ces pics de trafic et l'accès aléatoire ne permet pas de respecter les exigences temporelles des messages, en particulier pour les messages longs (pour lesquels la probabilité qu'un fragment subisse une collision est plus grande).

Un autre exemple de l'art antérieur se trouve dans US5838668.

L'objectif de l'invention est de réduire le délai de retransmission d'un message pour que le système de communication satellite permette le respect des exigences temporelles des services.

Plus précisément, l'invention concerne un procédé de communication pour la retransmission d'au moins un fragment de message perdu ou erroné depuis un terminal (300) vers une passerelle (302) sur un réseau de communication comprenant une pluralité de terminaux, communiquant par l'intermédiaire d'une ressource de communication sur un accès multiple à la demande, ledit réseau de communication comprenant en outre un centre de contrôle (303) allouant la ressource de communication aux terminaux, ledit procédé étant caractérisé en ce qu'il comporte les étapes suivantes :
- la transmission (31) d'un premier plan d'allocation des ressources de communication depuis le centre de contrôle (303) vers le terminal et vers la passerelle (302) qui mémorise ce plan d'allocation,
- la transmission du message du terminal vers la passerelle conformément au premier plan d'allocation,
- la détection (34), par la passerelle (302), de fragments de messages perdus ou erronés (par les techniques classiques, complétée par le plan d'allocation mémorisé) et, lorsqu'au moins un fragment de message perdu ou erroné est détecté, la notification (35) par la passerelle (302) au centre de contrôle (303) de la perte d'au moins un fragment du message,
- le calcul, par le centre de contrôle (303) d'un second plan d'allocation prenant en compte un nouvel envoi du fragment de message perdu ou erroné,
- la notification (36), par la passerelle (302) au terminal de la perte du fragment de message et la notification (36bis) par le centre de contrôle (303) au terminal du second plan d'allocation prenant en compte un nouvel envoi du fragment de message perdu,
- la transmission (37) par le terminal du fragment de message perdu conformément au second plan d'allocation vers la passerelle.

Avantageusement, ledit premier plan d'allocation est transmis simultanément au terminal et à la passerelle (302).

Avantageusement, chacun des messages étant identifié par une référence dans le premier plan d'allocation, lors de la notification (35) par la passerelle (302) au centre de contrôle (303) de la perte d'au moins un fragment du message, la passerelle notifie également la référence du message perdu ou erroné, issue du premier plan d'allocation, au centre de contrôle (303).

Avantageusement, un message étant associé à une exigence de délai, le second plan d'allocation est calculé de sorte à respecter l'exigence de délai du message perdu.

Avantageusement, le terminal est un aéronef communiquant avec un centre de contrôle du trafic aérien par le biais d'un fournisseur de service de navigation aérienne.

L'invention concerne aussi un système de communication satellite conçu pour la mise en oeuvre du procédé selon l'une quelconque des revendications précédentes comprenant une passerelle (GES) et un centre de contrôle du réseau de communication satellite (NCC) entre au moins un segment utilisateur (UT) et un segment sol (GES et NCC), caractérisé :
- en ce que le centre de contrôle du réseau de communication satellite (NCC) comprend un moyen pour transmettre à la passerelle (GES) et aux terminaux un plan d'allocation des ressources de communication entre les terminaux et un moyen pour calculer un plan d'allocation de ressources de communication, en réponse à une notification de perte ou d'erreur d'un fragment de message, le plan d'allocation prenant en compte un nouvel envoi du fragment de message perdu ou erroné,
- et en ce que la passerelle (GES) comprend un moyen d'enregistrement dudit plan d'allocation des ressources du réseau de communication, un moyen pour détecter la perte ou une erreur d'un fragment de message prévu dans le plan d'allocation et un moyen pour informer le centre de contrôle (NCC) de la perte ou de l'erreur du fragment de message et de son identification permettant au centre de contrôle de déduire des exigences de transmission du message.

Un premier avantage est de réduire le délai de retransmission des données et donc d'apporter un gain de performance significatif car il permet d'éviter un aller-retour d'une requête de capacité et du plan d'allocation associé.

Un deuxième avantage de l'invention est qu'il ne modifie pas le mécanisme de détection/retransmission des messages perdus. L'invention complémente ce mécanisme avec le mécanisme de réallocation de la ressource pour la donnée perdue.

Ceci permet également de respecter les contraintes de ces services ce qui ne serait pas possible sans cette optimisation ou sans le surdimensionnement du système couplé à l'utilisation d'une autre technique d'accès.

L'invention sera mieux comprise et d'autres avantages apparaîtront à la lecture de la description qui va suivre donnée à titre non limitatif et grâce aux figures suivantes :
La figure 1 représente l'architecture d'un réseau de communication aéronautique intégrant un réseau d'accès par satellite.
La figure 2 représente les étapes d'un procédé de communication satellite d'une solution usuelle de l'état de la technique.
La figure 3 représente les étapes du procédé de communication satellite selon l'invention.

L'invention s'applique à n'importe quel système de communication comprenant un premier segment et un second segment communiquant par l'intermédiaire d'une ressource de communication partagée entre les utilisateurs grâce à un accès multiple à la demande.

L'invention s'applique en particulier à un système de communication satellite entre des aéronefs et au moins une unité au sol. L'invention peut aussi s'appliquer à un système de communication au sol de type 4G (pour 4^{ème} génération) LTE (pour Long Term Evolution).

L'invention sera décrite par la suite sur la base de l'exemple de la figure 1. Cette dernière présente un système de communication satellite entre des aéronefs 11.1, 11.2, 11.3, 11.4, et au moins une unité au sol. L'unité au sol appartient à un réseau terrestre ATN reliant des centres d'opération de compagnie AOC et des contrôleurs de trafic aérien connectés au réseau de gestion du trafic aérien via des fournisseurs de service de navigation aérienne ANSP.

Le système utilise une ressource de communication satellite, dite ressource voie retour, permettant de transmettre des messages depuis les aéronefs 11.1, 11.2, 11.3, 11.4 vers l'unité au sol. Chacun des aéronefs 11.1, 11.2, 11.3, 11.4 comporte des applications embarquées et un terminal pour communiquer avec l'unité au sol. Les messages envoyés par les aéronefs sont associés à des services. On peut citer par exemple : le service COTRAC qui permet au pilote et au contrôleur du trafic aérien de coordonner la trajectoire de l'aéronef en temps réel. Un message d'un service, qui a une certaine taille, est associé à une priorité et une exigence de délai de bout en bout du réseau de communication.

Le système de communication comprend une unité 12 chargée d'acheminer le trafic entre les aéronefs et les unités au sol (et inversement). C'est par cette unité 12, appelée dans la suite de la description passerelle, que transitent tous les messages échangés entre les aéronefs et les unités au sol.

Le système de communication comprend aussi un centre de contrôle NCC 13 chargé de partager la ressource de communication satellite entre les aéronefs (dont le nombre peut être supérieur à plusieurs milliers). Pour pouvoir facilement répartir la ressource de communication entre les aéronefs, celle-ci est découpée temporellement en trames. Chaque trame est, elle aussi, découpée temporellement en créneaux (ou time slot en anglais). Un plan d'allocation alloue des créneaux temporels pour la transmission des messages.

La passerelle 12 transmet les messages vers le réseau terrestre ATN reliant les centres d'opération de compagnie AOC et les contrôleurs de trafic aérien connecté au réseau de gestion du trafic aérien via les fournisseurs de service de navigation aérienne ANSP.

Le plus souvent, la passerelle 12 et le centre de contrôle NCC 13 peuvent être localisés dans un même établissement mais selon une autre architecture, ces deux entités peuvent être localisés à des lieux différents.

Dans ce deuxième cas nous considérons un réseau de communication terrestre entre ces deux entités avec un délai de propagation faible en comparaison du délai satellite.

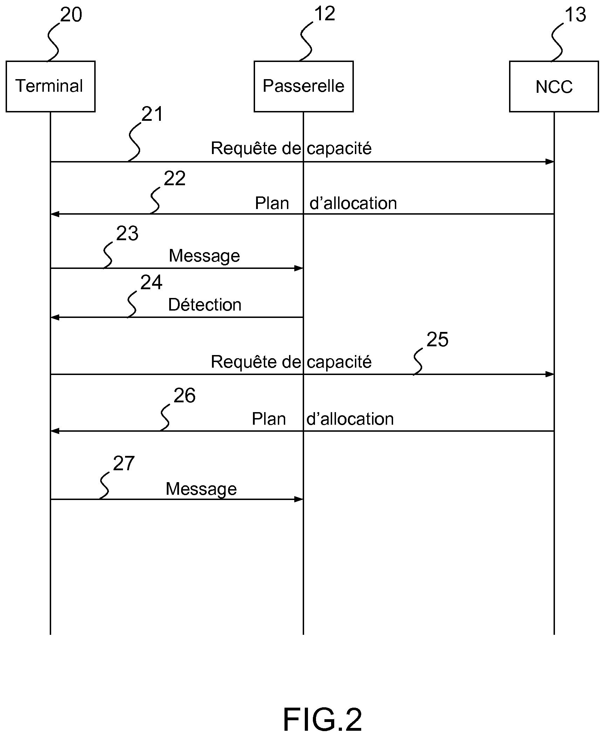

Un procédé habituel de l'état de la technique pour l'envoi d'un message provenant d'un terminal utilisateur 11.1, 11.2, 11.3, 11.4 est représenté sur la figure 2. Ce procédé illustre le cas de transmission de données lorsqu'un fragment de message ou un message entier est perdu. Ce procédé est décrit plus en détail par la figure 2. Des étapes préliminaires de transmission de données et de mécanisme de détection d'erreur sont identiques dans le procédé selon l'invention.

Pour l'envoi d'un message sur le réseau de communication satellite, le procédé connu comprend une première étape 21 d'émission, par le premier terminal 11.2, d'une requête de capacité pour au moins un message, la requête indiquant la taille du message, et dans le cas de l'utilisation d'un procédé d'allocation tel que décrit dans la demande de brevet français FR1000804, une référence temporelle indiquant la date de réception par le terminal du message et, éventuellement, l'exigence de délai de bout en bout du réseau de communication associée au message, et une priorité associée au message. En pratique, la requête de capacité peut contenir une information du type de service associé au message. Le service indique alors la priorité et l'exigence de délai du message de manière implicite. La requête est destinée au centre de contrôle NCC 13 en charge de la répartition de la ressource entre les aéronefs 11.1, 11.2, 11.3, 11.4.

En réponse à la requête de capacité, le centre de contrôle NCC 13 de la ressource de communication alloue une ressource de communication au terminal à l'origine de la requête (sous forme de créneaux temporels). Dans le cas de l'utilisation d'un procédé d'allocation tel que décrit dans la demande de brevet français FR1000804, cette allocation est déterminée en réalisant un calcul d'un ordonnancement des messages en prenant en compte la référence temporelle et l'exigence de délai associée aux messages.

Ensuite, à une seconde étape 22 le centre de contrôle NCC 13 diffuse à destination des terminaux des aéronefs, un plan d'allocation déterminé à partir de l'ordonnancement des messages calculé.

En pratique, le centre de contrôle NCC reçoit en continue des requêtes de capacité provenant des différents aéronefs. A intervalles régulier, il calcule un ordonnancement des différents messages. Puis, un plan d'allocation est déterminé à partir de cet ordonnancement. Le plan d'allocation définit quel est le terminal qui dispose du droit d'émettre sur la ressource de communication pour une plage de temps donnée (un ou plusieurs créneaux temporels). L'ordonnancement et le plan d'allocation sont recalculés, par exemple, toutes les secondes en prenant en compte les nouvelles requêtes de capacités.

Une fois que l'utilisateur a pris connaissance de la ressource de communication qui lui a été attribuée (c'est à dire, les créneaux temporels correspondant) celui-ci émet, à une étape 23, son message dans l'intervalle de temps alloué.

Lorsqu'une perte du message ou d'un fragment intervient, un mécanisme de détection 24 réalisé par la passerelle en collaboration avec le terminal permet à ce dernier d'être informé de la perte du message. Une technique courante de détection des erreurs de transmission de fragments ou messages consiste pour la passerelle à acquitter l'ensemble des fragments reçus. Après un certain délai (devant être minimisé pour une efficacité du mécanisme), si le terminal n'a pas reçu d'acquittement, il considère le fragment comme étant perdu et renouvelle le processus de transmission pour ce fragment. Le terminal peut également recevoir un acquittement lui indiquant les fragments qui ont été reçus et il peut donc en déduire ceux qui ne l'ont pas été (les derniers fragments perdus ne peuvent cependant pas être détectés par cette méthode). Ce type de détection est qualifiée par la suite d'implicite. L'utilisateur doit alors reproduire les premières étapes du procédé, une étape d'envoi de requête de capacité 25 pour obtenir une nouvelle ressource de communication, une étape d'attente d'un nouveau plan d'allocation 26 et une étape de retransmission 27 du message vers la passerelle (GES).

Selon l'invention, la détection peut aussi être basée sur le plan d'allocation précédemment mémorisé par la passerelle (non-réception d'un fragment prévu) qui informe le centre de contrôle d'une perte d'au moins un fragment d'un message en plus de la mise en oeuvre des mécanismes de récupération d'erreur (de type ARQ). Ce type de détection est qualifiée par la suite d'explicite

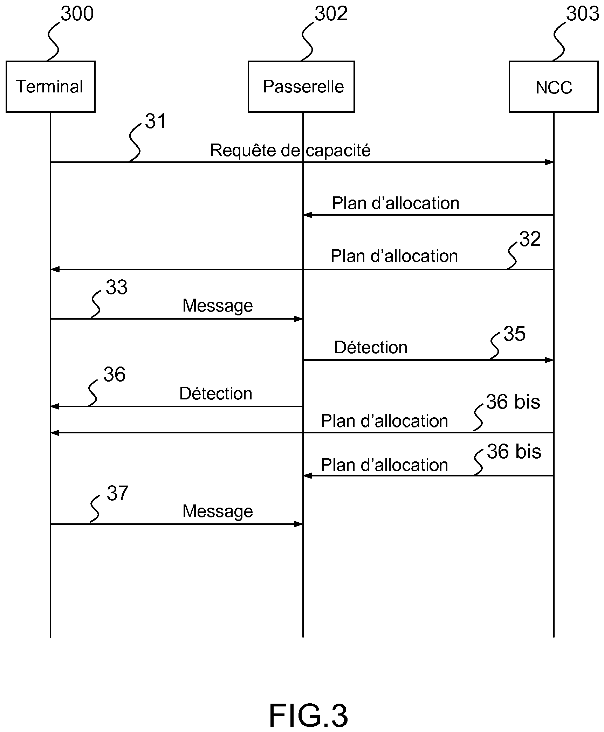

La figure 3 représente le procédé selon l'invention. A l'identique du procédé connu, le procédé comprend, pour l'envoi d'un message sur le réseau de communication satellite, une première étape 31 d'émission, par le terminal 300, d'une requête de capacité pour au moins un message vers le centre de contrôle NCC 303.

Ensuite, à une seconde étape 32 le centre de contrôle NCC 303 diffuse à destination des terminaux des aéronefs, un plan d'allocation déterminé à partir de l'ordonnancement des messages calculé. Selon une caractéristique essentielle de l'invention, ce plan d'allocation est également transmis à la passerelle 302.

En pratique, le centre de contrôle NCC 13 reçoit en continu des requêtes de capacité provenant des différents aéronefs. A intervalles régulier, il calcule un ordonnancement des différents messages. Puis, un plan d'allocation est déterminé à partir de cet ordonnancement. Le plan d'allocation définit quel est le terminal qui dispose du droit d'émettre sur la ressource de communication pour une plage de temps donnée (un ou plusieurs créneaux temporels). L'ordonnancement et le plan d'allocation sont recalculés, par exemple, toutes les secondes en prenant en compte les nouvelles requêtes de capacités. Ce plan d'allocation est également transmis périodiquement à la passerelle 302.

Une fois que l'utilisateur a pris connaissance de la ressource de communication qui lui a été attribuée (c'est à dire, les créneaux temporels correspondant) celui-ci émet, à une étape 33, son message dans l'intervalle de temps alloué.

Lorsqu'une perte du message ou d'un fragment 34 intervient, le mécanisme de détection réalisé comme décrit précédemment par la passerelle en collaboration avec le terminal permet à ce dernier d'être informé de la perte du message. De plus, selon l'invention la passerelle est en connaissance du plan d'allocation, celui-ci ayant été communiqué lors de l'étape précédente 32, et est capable de détecter et d'identifier les messages ou fragments perdus ou erronés.

A une étape 35, la passerelle 302 indique au centre de contrôle du réseau de communication NCC 303 quel message ou fragment a été perdu. Le centre de contrôle ayant conservé les caractéristiques et les exigences du message perdu, il 303 peut dès cette étape du procédé positionner dans le plan d'allocation les ressources de communication nécessaires à une nouvelle transmission du message (ou du fragment de message) perdu, de telle manière que les exigences temporelles de chacun des messages sont respectées. Le respect des exigences temporelles de chacun des messages nécessite l'utilisation d'un procédé d'allocation tel que celui décrit dans la demande de brevet français FR1000804.

Par conséquent, à l'étape d'information 36 du terminal celui-ci est informé (implicitement ou explicitement) par la passerelle 302 de la perte du message envoyé précédemment et en parallèle le centre de contrôle NCC 303 informe 36bis le terminal de la disponibilité d'une nouvelle ressource de communication positionnée dans le plan d'allocation de sorte que les exigences initiales du message sont respectées. Grâce à cette information, l'utilisateur est capable de retransmettre immédiatement son message qui avait été perdu sans reformuler une requête de capacité et sans perte de temps d'attente d'une nouvelle requête de capacité et d'un nouveau plan d'allocation. La détection de la perte du message par le terminal et l'émission de l'information (émise par le centre de contrôle NCC 303) indiquant la disponibilité d'une nouvelle ressource de communication pour retransmettre le message, sont synchronisées de sorte que l'utilisateur n'ait pas à émettre une requête de réservation de ressource pour retransmettre le message perdu.

Bien évidemment, si un ou plusieurs messages/fragments ont été perdus lors du premier envoi, le nouveau plan d'allocation transmis à l'étape 36 comprend une ou plusieurs ressources de communication successives ou disjointes temporellement permettant de répondre aux exigences de chacun des messages.

Selon une variante de réalisation améliorée de l'invention, le calcul du plan d'allocation peut être réalisé selon le procédé tel que revendiqué dans la demande de brevet français FR1000804. En outre, le calcul du plan d'allocation peut être élaboré selon l'une quelconque des variantes de réalisation de ce procédé. En pratique, à chaque fois que la passerelle 202 informe le centre de contrôle NCC 203 de la perte d'un message, celui-ci génère une requête de capacité prenant en compte la taille du message, l'exigence de délai associée au message et la référence temporelle d'arrivée du message dans le système. La priorité d'une telle requête est généralement très élevée dans le cas de l'utilisation du procédé tel que revendiqué dans la demande de brevet français FR1000804, car nécessairement plus proche de l'expiration du délai de validité du message imposée par l'exigence de délai associée à ce message (du fait de la perte initiale du message).

L'avantage principal de l'invention est qu'elle permet de minimiser le délai de retransmission des données perdues sur le canal lorsqu'un accès à la demande est utilisé. De plus, elle ne modifie pas les mécanismes existants permettant la détection et la retransmission de données perdues sur le canal. Ainsi, elle va permettre de minimiser les délais de bout en bout des messages envoyés dans le cadre de la gestion du trafic aérien.

Lorsque le procédé est associé à une allocation optimisée de la ressource telle que celle décrite dans la demande de brevet français FR1000804, les caractéristiques temporelles de chaque message sont prises en compte de manière à ce qu'il respecte les exigences temporelles du service auquel il appartient, lorsque cela est possible. Cette solution permet donc de partager une ressource entre un plus grand nombre de terminaux, tout en conservant un respect des exigences temporelles de l'ensemble de leurs services.

Le gain en terme de délai correspond à minima à un aller/retour requête/allocation (un RTT : Round Trip Time) sur le lien satellite pour chaque retransmission de message ou de fragment de message auquel il faut ajouter le gain de l'allocation optimisée (tel que celui décrit dans la demande de brevet français FR1000804) qui permet de plus d'accepter près de deux fois plus de terminaux sur une ressource constante en respectant les exigences temporelles pour l'ensemble de leurs services. Le gain d'un RTT satellite correspond au délai nécessaire pour que le terminal fasse une requête de capacité lorsqu'il a connaissance de la perte d'un de ces messages ou fragment (au minimum un aller satellite) auquel il faut ajouter le délai nécessaire à la transmission du plan d'allocation (au minimum un aller satellite supplémentaire). Ce gain d'un RTT satellite (environ 500 ms sans compter les délais de traitement) pour la transmission des messages n'est pas négligeable devant les exigences de délai de bout en bout de certains services qui correspondent pour les plus bas d'entre eux à des valeurs entre 1,4s et 2,4s. Ce gain en termes de performance permet une utilisation améliorée des ressources, et permet donc d'admettre un plus grand nombre de terminaux, pour lesquels les exigences temporelles de l'ensemble de leurs services seront respectées, sur une ressource constante.

L'invention s'applique aux systèmes de communication satellite utilisé pour la gestion du trafic aérien, et plus généralement a tout système de communication satellite contraint par des exigences de qualité de service fortes, en termes de délai de délivrance de message et de fiabilité.

## Revendications

1. Procédé de communication pour la retransmission d'au moins un fragment de message perdu ou erroné depuis un terminal (300) vers une passerelle (302) sur un réseau de communication comprenant une pluralité de terminaux, communiquant par l'intermédiaire d'une ressource de communication sur un accès multiple à la demande, ledit réseau de communication comprenant en outre un centre de contrôle (303) allouant la ressource de communication aux terminaux, ledit procédé étant **caractérisé en ce qu'**il comporte les étapes suivantes :
- la transmission (31) d'un premier plan d'allocation des ressources de communication depuis le centre de contrôle (303) vers le terminal et vers la passerelle (302),
- la transmission du message du terminal vers la passerelle conformément au premier plan d'allocation,
- la détection (34), par la passerelle (302), de fragments de messages perdus ou erronés et, lorsqu'au moins un fragment de message perdu ou erroné est détecté, la notification (35) par la passerelle (302) au centre de contrôle (303) de la perte d'au moins un fragment du message,
- le calcul, par le centre de contrôle (303) d'un second plan d'allocation prenant en compte un nouvel envoi du fragment de message perdu ou erroné,
- la notification (36) par la passerelle (302) au terminal de la perte du fragment de message et la notification (36bis) par le centre de contrôle (303) au terminal du second plan d'allocation prenant en compte un nouvel envoi du fragment de message perdu,
- la transmission (37) par le terminal du fragment de message perdu conformément au second plan d'allocation vers la passerelle.

2. Procédé selon la revendication 1, dans lequel, lors de l'étape de transmission (31) du premier plan d'allocation, ledit premier plan d'allocation est transmis simultanément au terminal et à la passerelle (302).

3. Procédé selon l'une quelconque des revendications précédentes, dans lequel, chacun des messages étant identifié par une référence dans le premier plan d'allocation, lors de la notification (35) par la passerelle (302) au centre de contrôle (303) de la perte d'au moins un fragment du message, la passerelle notifie également la référence du message perdu ou erroné, issue du premier plan d'allocation, au centre de contrôle (303).

4. Procédé selon l'une quelconque des revendications précédentes, dans lequel, un message étant associé à une exigence de délai, le second plan d'allocation est calculé de sorte à respecter l'exigence de délai du message perdu.

5. Procédé selon l'une quelconque des revendications précédentes, dans lequel le terminal est un aéronef communiquant avec un centre de contrôle du trafic aérien par le biais d'un fournisseur de service de navigation aérienne.

6. Système de communication satellite conçu pour la mise en oeuvre du procédé selon l'une quelconque des revendications précédentes comprenant une passerelle et un centre de contrôle du réseau de communication satellite (NCC) entre au moins un segment utilisateur et un segment sol **caractérisé :**
- **en ce que** le centre de contrôle du réseau de communication satellite (NCC) comprend un moyen pour transmettre à la passerelle et aux terminaux un plan d'allocation des ressources de communication entre les terminaux et un moyen pour calculer un plan d'allocation de ressources de communication, en réponse à une notification de perte ou d'erreur d'un fragment de message, le plan d'allocation prenant en compte un nouvel envoi du fragment de message perdu ou erroné,
- et **en ce que** la passerelle comprend un moyen d'enregistrement dudit plan d'allocation des ressources du réseau de communication, un moyen pour détecter la perte ou une erreur d'un fragment de message prévu dans le plan d'allocation et un moyen pour informer le centre de contrôle (NCC) de la perte ou de l'erreur du fragment de message et de son identification permettant au centre de contrôle de déduire des exigences de transmission du message.

## Patentansprüche

1. Kommunikationsverfahren zum Neusenden von wenigstens einem verlorenen oder fehlerhaften Nachrichtenfragment von einem Endgerät (300) zu einem Gateway (302) auf einem Kommunikationsnetz, das mehrere Endgeräte umfasst, die über eine Kommunikationsressource für Mehrfachzugriff nach Bedarf kommunizieren, wobei das Kommunikationsnetz ferner eine Steuerzentrale (303) umfasst, die den Endgeräten die Kommunikationsressource zuweist, wobei das Verfahren **dadurch gekennzeichnet ist, dass** es die folgenden Schritte beinhaltet:
- Senden (31) eines ersten Plans der Zuweisung von Kommunikationsressourcen von der Steuerzentrale (303) zum Endgerät und zum Gateway (302);
- Senden der Nachricht vom Endgerät zum Gateway gemäß dem ersten Zuweisungsplan;
- Erkennen (34), durch das Gateway (302), von verlorenen oder fehlerhaften Nachrichtenfragmenten und, wenn wenigstens ein verlorenes oder fehlerhaftes Nachrichtenfragment erkannt wird, Benachrichtigen (35), durch das Gateway (302), der Steuerzentrale (303) über den Verlust von wenigstens einem Fragment der Nachricht;
- Berechnen, durch die Steuerzentrale (303), eines zweiten Zuweisungsplans, der eine neue Sendung des verlorenen oder fehlerhaften Nachrichtenfragments berücksichtigt;
- Benachrichtigen (36), durch das Gateway (302), des Endgeräts über den Verlust des Nachrichtenfragments, und Benachrichtigen (36bis), durch die Steuerzentrale (303), des Endgeräts über den zweiten Zuweisungsplan, der eine neue Sendung des verlorenen Nachrichtenfragments berücksichtigt;
- Senden (37), durch das Endgerät, des verlorenen Nachrichtenfragments zu dem Gateway gemäß dem zweiten Zuweisungsplan.

2. Verfahren nach Anspruch 1, wobei während des Schrittes (31) des Sendens des ersten Zuweisungsplans der erste Zuweisungsplan gleichzeitig zu dem Endgerät und zu dem Gateway (302) gesendet wird.

3. Verfahren nach einem der vorherigen Ansprüche, wobei, wenn jede der Nachrichten durch eine Referenz im ersten Zuweisungsplan identifiziert wird, das Gateway (302) beim Benachrichtigen (35) der Steuerzentrale (303) durch das Gateway über den Verlust von wenigstens einem Nachrichtenfragment die Steuerzentrale (303) auch über die vom ersten Zuweisungsplan gegebene Referenz der verlorenen oder fehlerhaften Nachricht benachrichtigt.

4. Verfahren nach einem der vorherigen Ansprüche, wobei, wenn eine Nachricht mit einer Fristanforderung assoziiert ist, der zweite Zuweisungsplan so berechnet wird, dass er die Fristanforderung der verlorenen Nachricht erfüllt.

5. Verfahren nach einem der vorherigen Ansprüche, wobei das Endgerät ein Luftfahrzeug ist, das über einen Flugnavigationsdiensteanbieter mit einer Flugsicherungszentrale kommuniziert.

6. Satellitenkommunikationssystem, ausgelegt zum Ausführen des Verfahrens nach einem der vorherigen Ansprüche, das ein Gateway und eine Satellitenkommunikationsnetz-Steuerzentrale (NCC) zwischen wenigstens einem Benutzersegment und einem Bodensegment umfasst, **dadurch gekennzeichnet, dass**:
- die Satellitenkommunikationsnetz-Steuerzentrale (NCC) ein Mittel zum Senden eines Plans der Zuweisung von Kommunikationsressourcen zwischen den Endgeräten zu dem Gateway und zu den Endgeräten und ein Mittel zum Berechnen eines Plans der Zuweisung von Kommunikationsressourcen als Reaktion auf eine Benachrichtigung über ein verlorenes oder fehlerhaftes Nachrichtenfragment umfasst, wobei der Zuweisungsplan eine neue Sendung des verlorenen oder fehlerhaften Nachrichtenfragments berücksichtigt;
- und dadurch, dass das Gateway ein Mittel zum Aufzeichnen des Plans der Zuweisung von Ressourcen des Kommunikationsnetzes, ein Mittel zum Erkennen des Verlusts oder eines Fehlers eines in dem Zuweisungsplan vorgesehenen Nachrichtenfragments und ein Mittel zum Benachrichtigen der Steuerzentrale (NCC) über den Verlust oder Fehler des Nachrichtenfragments und der Identifikation der Nachricht umfasst, so dass die Steuerzentrale Sendeanforderungen für die Nachricht ableiten kann.

## Claims

1. A communication method for retransmitting at least one lost or erroneous message fragment from a terminal (300) to a gateway (302) on a communication network comprising a plurality of terminals, which communicate by means of a communication resource for multiple access on demand, said communication network further comprising a control centre (303) assigning said communication resource to said terminals, said method being **characterised in that** it comprises the following steps:
- transmitting (31) a first plan for assigning communication resources from said control centre (303) to said terminal and to said gateway (302);
- transmitting the message from said terminal to said gateway according to said first assignment plan;
- detecting (34), by said gateway (302), lost or erroneous message fragments and, when at least one lost or erroneous message fragment is detected, notifying (35), by said gateway (302), said control centre (303) of the loss of at least one fragment of the message;
- computing, by said control centre (303), a second assignment plan that considers a new transmission of the lost or erroneous message fragment;
- notifying (36), by said gateway (302), said terminal of the loss of the message fragment and notifying (36bis), by said control centre (303), said terminal of said second assignment plan that considers a new transmission of the lost message fragment;
- transmitting (37), by said terminal, the lost message fragment to said gateway according to said second assignment plan.

2. The method according to claim 1, wherein, during said step (31) of transmitting said first assignment plan, said first assignment plan is simultaneously transmitted to said terminal and to said gateway (302).

3. The method according to any one of the preceding claims, wherein, with each of the messages being identified by a reference in said first assignment plan, when said gateway (302) notifies said control centre (303) of the loss of at least one message fragment, said gateway also notifies said control centre (303) of the reference of the lost or erroneous message that originates from said first assignment plan.

4. The method according to any one of the preceding claims, wherein, with a message being associated with a timing requirement, said second assignment plan is computed so as to comply with the timing requirement of the lost message.

5. The method according to any one of the preceding claims, wherein said terminal is an aircraft communicating with an air traffic control centre through an air navigation service provider.

6. A satellite communication system designed to implement the method according to any one of the preceding claims, comprising a gateway and a satellite communication network control centre (NCC) between at least one user segment and one ground segment, **characterised in that**:
- said satellite communication network control centre (NCC) comprises a means for transmitting a plan for assigning communication resources between said terminals to said gateway and to said terminals and a means for computing a plan for assigning communication resources in response to a notification of the loss or error of a message fragment, said assignment plan considering a new transmission of the lost or erroneous message fragment;
- and **in that** said gateway comprises a means for logging said plan for assigning resources of said communication network, a means for detecting the loss or an error of a message fragment provided in said assignment plan and a means for notifying said control centre (NCC) of the loss or error of the message fragment and of the identification of the message that allows said control centre to determine transmission requirements for the message.
